# EUROPEAN PATENT SPECIFICATION

(11) **EP 1 627 808 B1**
(45) Date of publication and mention of the grant of the patent: **19.03.2008**
(21) Application number: 05017424.2
(22) Date of filing: 10.08.2005
(51) Int. Cl.: B62K 19/32, B62K 21/06, B62K 21/18

(54) **Bicycle headset arrangement**
Lenkkopf für ein Fahrrad
Tube de direction pour bicyclette

(30) Priority: 20.08.2004 JP 2004240993
(43) Date of publication of application: 22.02.2006
(73) Proprietor: SHIMANO INC., Osaka 590-8577 (JP)
(72) Inventor: Okajima, Shinpei, Izumi, Osaka (JP); Goto, Masashi, Osaka 591-8035 (JP)
(74) Representative: Grosse, Wolfgang

(56) References cited:
- EP-A- 0 541 070
- GB-A- 2 328 913
- US-A- 5 454 281
- US-A- 5 893 574
- US-A1- 2003 121 357

## Description

### BACKGROUND OF THE INVENTION

This invention generally relates to a bicycle headset arrangement. More specifically, the present invention relates to a bicycle headset arrangement used for coupling a fork column of a bicycle front fork with a bicycle head tube having a pair of top and bottom bearings disposed on top and bottom end portions of the bicycle head tube, respectively.

Document US-A-5 893 574 discloses a bicycle headset arrangement for attaching a fork column to a head tube with a pair of top and bottom bearings disposed in top and bottom ends thereof, the bicycle headset arrangement comprising: an adjustment member including a tubular part configured and arranged such that the fork column passes through the tubular part, a contact part disposed in a second axial end portion of the tubular part and configured and arranged to contact with the top bearing of the head tube, and
a plurality of slots formed in the first axial end portion of the tubular part to extend in the axial direction of the tubular part as the slots being spaced apart in a peripheral direction of the tubular part; and
a first fastening member configured and arranged to press the tubular part of the adjustment member from an outer peripheral side of the tubular part to securely fasten the adjustment member to the bicycle fork column.

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well as the frame of the bicycle. One component that has been extensively redesigned is a bicycle head structure.

U.S. Patent No. 5,330,220 discloses a conventional bicycle headset for rotatably fitting a fork stem in a head tube of a bicycle. In this publication, the front fork of the bicycle is rotatably mounted onto a head tube of the bicycle frame. The head tube has a pair of top and bottom bearings at top and bottom ends of the head tube, respectively. The bicycle headset is used for coupling the front fork with the fork column. The conventional bicycle headset disclosed in this publication has a top ball bearing retainer that engages a male screw part formed on an outer circumferential surface of the fork column of the front fork, and a lock nut that locks the top ball bearing retainer.

On the other hand, a front fork that does not have a male screw part on a fork column has been widely used recently. For example, U.S. Patent No. 5,095,770 discloses this type of front fork that does not have a male screw part, in which the fork column protrudes upward from the head tube, and the handle stem is equipped on the outer periphery of the protruding fork column. In such structure, a bicycle headset for coupling the front fork with the fork column has a lock nut, which is engaged on the inner part of the fork column, an adjustment bolt that mates with the lock nut, a cover member that is attached on the top part of the handle stem by the adjustment bolt, and a compression ring with a slit that is disposed between the fork column and a ball bearing on the top side. In the conventional bicycle headset having this type of structure, after the compression ring and the handle stem are mounted to the fork column, the cover member is attached on the top part of the handle stem, and the adjustment bolt is engaged with the lock nut to attach the front fork to the head tube. Moreover, the ball bearing adjustment or bearing play is adjusted through increasing or decreasing the tightening of the adjustment bolt after inserting and tightening the compression ring between the fork column and the ball bearing. Moreover, the height of the handle stem is adjusted by providing ring-shaped spacers between the handle stem and a top ball retainer, and between the handle stem and the cover member. However, in the conventional bicycle headset structured in this way, the lock nut is engaged in the inside of the fork column, and thus, when the bearing play or ball contact of the front fork is adjusted, for example, the tightening force of the handle stem must be loosened to perform the adjustment. Therefore, the bearing play adjustment becomes difficult to perform.

In view of the above, one may consider providing a lock member on the outer peripheral surface of the fork column to attach the fork column to the head tube. For example, Taiwan Patent No. 225,753 discloses an adaptation of a conventional head part that can be attached to the outer periphery of a handle stem. This type of the conventional head part comprises a ring-shaped lock member (an example of first and second fastening members) that has a slit extending vertically and that has a circular space that can be fastened securely to the handle stem by two bolts that are disposed at the top and bottom of the slit. Such conventional bicycle headset further comprises a top ball bearing retainer (an example of an adjustment member) that is disposed in a space formed in the bottom half of the lock member. A male screw part is formed on the inner peripheral surface of the space in the bottom half of the lock member, and the space at the top half of the lock member has a smaller diameter than the female screw part to make contact with the handle stem. The top ball bearing retainer is configured and arranged to contact the top side of the ball bearing of the head tube, and is a cylindrical member through which the handle stem passes. The top ball bearing retainer includes a male screw part, which mates with the female screw part, on the outer peripheral surface of the top part thereof. Furthermore, on the outer peripheral surface of the middle part of the top ball bearing retainer includes a tool fit part that has a hexagonal shape when viewed in a top plan view, with which a crescent wrench, or the like, fit to tighten the top ball bearing retainer.

When the conventional bicycle headset with this type of structure is used for mounting a fork column rather than a handle stem, the top ball bearing retainer and the lock member are equipped on the fork column in that order, and the top half of the lock member is secured to the fork column by the bolt disposed in the top side. At this time, the bolt disposed in the bottom side must be loosened. Moreover, the top ball bearing retainer is rotated by a tool such as a crescent wrench to adjust the ball contact or bearing play in the ball bearings so that the fork column can turn smoothly without rattling. When the adjustment of the ball contact has been completed, then the bolt disposed in the bottom side is also tightened to secure the bicycle headset to the fork column, thereby completing the installation of the front fork.

In the conventional head part described above, it is possible to firmly fasten the lock member to the fork column though tightening the top bolt. Because of this, the bearings are adjusted without loosening the handle stem. However, even though it is possible to prevent the rotation of the top ball bearing retainer when tightening the bottom bolt, it is not possible to adequately tighten and secure the top ball retainer onto the fork column because the top ball bearing retainer does not deform. As a result, when the conventional bicycle headset is used in securing the fork column, there is a risk that the fastening to the fork column will be inadequate.

In view of the above, it will be apparent to those skilled in the art from this disclosure that there exists a need for an improved bicycle headset arrangement. This invention addresses this need in the art as well as other needs, which will become apparent to those skilled in the art from this disclosure.

### SUMMARY OF THE INVENTION

One object of the present invention is to provide a bicycle headset arrangement that is secured to the outer periphery of the fork column and that can be adequately fasten onto the fork column, while making it easy to adjust the bearings.

In order to achieve the above mentioned object and other objects of the present invention, a bicycle headset arrangement for attaching a fork column to a head tube with a pair of top and bottom bearings disposed in top and bottom ends thereof is provided that basically comprises an adjustment member and a first fastening member. The adjustment member includes a tubular part, a contact part and a plurality of slots. The tubular part has a male screw part formed on an outer peripheral surface of a first axial end portion of the tubular part. The tubular part is configured and arranged such that the fork column passes through the tubular part. The contact part is disposed in a second axial end portion of the tubular part, and configured and arranged to contact with the top bearing of the head tube. The slots are formed in the first axial end portion of the tubular part to extend in the axial direction of the tubular part as the slots being spaced apart in a peripheral direction of the tubular part. The first fastening member has a female screw part formed on an inner peripheral surface thereof that is configured and arranged to engage the male screw part of the adjustment member. The first fastening member is configured and arranged to press the tubular part of the adjustment member from an outer peripheral side of the tubular part to securely fasten the adjustment member to the bicycle fork column.

When assembling the bicycle headset arrangement of the present invention, the first fastening member is screwed into the female screw part of the adjustment member. After this, while the bearing, which is disposed at the bottom end of the head tube, is in contact with the shoulder part of the front fork, an assembly unit where the first fastening member is assembled to the adjustment member is installed on the outer peripheral side from the top end of the fork column, through which the head tube passes, such that the adjustment member contacts the top bearing that is disposed on the top end of the head tube. When the assembly unit, which includes the adjustment member, is installed, a tool (e.g., a crescent wrench and the like) is used to rotate the adjustment member in a state where the rotational and upward movements of the first fastening member are restricted. When this is done, the first fastening member does not rotate relative to the fork column, thus making it possible to adjust the contact of the bearing through moving the adjustment member, which has the male screw part that mates with the female screw part of the first fastening member, up and down relative to the first fastening member. When the adjustment of the bearing contact has been completed, then pressure is applied to the tubular part by further tightening the first fastening member to further fasten the first fastening member to the fork column. Because there are a plurality of slots extending in the axial direction in the part of the tubular part of the adjustment member in a portion where the male screw part is formed, when pressure is applied to the tubular part by the first fastening member, the tubular part deforms towards the fork column side, and the first fastening member is fastened securely to the fork column through the tubular part of the adjustment member. Here, the adjustment member and the first fastening member are disposed on the outer peripheral part of the fork column, so the bearings are adjusted independently from the handle stem. This makes the bearing adjustment easy. Moreover, because the slots have been provided in the tubular part of the adjustment member to facilitate the deformation of the tubular part towards the fork column side, both the first fastening member and the adjustment member can be attached securely to the fork column, making it possible to fasten the bicycle headset arrangement securely to the fork column.

In accordance with a second aspect of the present invention, a second fastening member is provided that is configured and arranged to be securely fastened to the bicycle fork column above the tubular part of the adjustment member by pressing an outer peripheral surface of the bicycle fork column. The second fastening member is configured and arranged to be non-rotatable with respect to the first fastening member.

When assembling the bicycle headset arrangement with the above structure, the first fastening member is screwed into the male screw part of the adjustment member, and the second fastening member is non-rotatably mounted on the first fastening member. Then, while the bearing that is disposed on the bottom end of the head tube is in contact with the shoulder part of the front fork, an assembly unit wherein the first and second fastening member are assembled into the adjustment member is installed on the outer peripheral surface from the top end of the fork column that passes through the head tube so that the adjustment member contacts with the bearing that is disposed at the top end of the head tube. When the assembly unit that includes the adjustment member is installed, the second fastening member is securely fastened to the fork column through the application of pressure to the outer peripheral surface of the fork column by the second fastening member. Consequently, the rotational and upward movements of the second fastening member with respect to the fork column are restricted, making it impossible for the first fastening member, which is non-rotatable relative to the second fastening member, to either rotate or to move upward. When a tool such as a crescent wrench is used to rotate the adjustment member in this state, the first fastening member does not rotate relative to the fork column. Therefore, the bearing contact can be adjusted through moving the adjustment member, which has the male screw part that mates with the female screw part of the first fastening member, in the vertical direction relative to the first fastening member. When the bearing contact adjustment has been completed, pressure is applied to the tubular part by the first fastening member, and the first fastening member is also fastened to the fork column. Because a plurality of slots that extend in the axial direction are formed in the part of the tubular part of the adjustment member where the male screw part is formed, when pressure is applied to the tubular part at this time by the first fastening member, the tubular part deforms towards the fork column side, and the first fastening member is securely fastened to the fork column through the tubular part. Here, the adjustment member, the first fastening member, and the second fastening member are disposed on the outer peripheral part of the fork column, and thus, it is possible to adjust the bearings independent of the handle stem. This makes it easy to adjust the bearings. Moreover, because the slots are provided in the tubular part of the adjustment member to facilitate the deformation of the tubular part towards the fork column, the first fastening member is fastened along with the second fastening member onto the fork column, making it possible to fasten the bicycle headset arrangement securely to the fork column. In this case, the bicycle headset arrangement can be configured and arranged such that the second fastening member is removed after the installation of the front fork by the head has been completed.

In accordance with a third aspect of the present invention, the first fastening member comprises a first ring part and a first tightening part. The first ring part has a first ring portion with the female screw part formed on an inner peripheral surface thereof, a first protruding portion extending from the first ring portion in a radial outer direction, and a first slit formed in the first protruding portion extending in the radial direction from the inner peripheral surface of the first ring portion to the first protruding portion. The first tightening part is disposed in the first protruding portion of the first ring part, and configured and arranged to adjust a width of the first slit. Furthermore, the second fastening member comprises a second ring part and a second tightening part. The second ring part has a second ring portion configured and arranged to be attached to the bicycle fork column, a second protruding portion extending from the second ring portion in a radial outer direction, and a second slit formed in the second protruding portion extending in the radial direction from an inner peripheral surface of the second ring portion to the second protruding portion. The second tightening part is disposed in the second protruding portion of the second ring part and configured and arranged to adjust a width of the second slit.

In this case, the second ring part is mounted on the first ring part after screwing the first ring part into the adjustment member. Moreover, the fork column is also installed in the adjustment member, and the second tightening member is tightened on the second protruding portion to narrow the width of the second slit to fasten the second ring part onto the fork column. In this state, the adjustment member is rotated to adjust the bearing contact, after which the first tightening member is tightened on the first protruding portion to narrow the first slit. By doing this procedure, pressure is applied to the tubular part, securely fastening the first ring part to the fork column. Here, the first fastening member and the second fastening member are separate members, so the second ring part of the second fastening member is securely fastened by the fork column.

In accordance with a fourth aspect of the present invention, the first and second fastening members are configured and arranged to be disposed with respect to each other so that the first and second slits are disposed opposite sides in a radial direction of the first and second ring portions. In this case, the first and second slits, which are formed in the first and second protruding portions, respectively, are disposed to face in the radial direction. Therefore, it is possible to narrow the overall thickness of the first and second fastening members by arranging the thicknesses of the first and second ring parts to be thinner than the thicknesses for the first and second protruding portions. Therefore, it is possible to reduce the size and weight of the bicycle headset arrangement.

In accordance with a fifth aspect of the present invention, the first and second fastening members are configured and arranged to be disposed with respect to each other so that the first and second tightening parts are disposed opposite sides in the radial direction of the first and second ring portions. In this case, the first and second tightening parts are disposed facing in the radial direction of the first and second ring parts. Therefore, it is possible to reduce the overall thickness of the first and second fastening members by arranging the thicknesses of the first and second ring parts to be thinner than the thicknesses of the first and second protruding portions. Accordingly, it is possible to reduce the size and weight of the bicycle headset arrangement.

In accordance with a sixth aspect of the present invention, the first and second fastening members are configured and arranged to be disposed with respect to each other so that first and second slits are aligned in an axial direction of the first and second ring portions. In this case the tightening operations are easy because the first and second tightening parts for reducing the widths of the first and second slits are disposed in the same position in the radial direction of the first and second ring parts.

In accordance with a seventh aspect of the present invention, the first and second ring portions further include first and second hinge parts, respectively, that are configured and arranged to open and close the first and second ring portions. In this case, the first and second ring parts can selectively open and close. Therefore, the attachment and removal of the first and second ring parts can be facilitated. Moreover, because each of the first and second rings can be tightened easily by using the hinges, the fastening force that is tightened onto the fork column is increased.

In accordance with an eighth aspect of the present invention, the first and second ring portions include step structures to prevent a relative rotation between the first and second ring parts. In this case, relative rotation between the first and second fastening members can be stopped easily by the step.

In accordance with a ninth aspect of the present invention, the first and second ring portions include a structure with a radial protrusion and a radial indentation to prevent relative rotation between the first and second ring parts by engaging the radial protrusion with the radial indentation. In this case, relative rotation between the first and second fastening members can be stopped easily by the structure with the protrusion and the indentation.

In accordance with a tenth aspect of the present invention, the second ring portion includes an escape part configured and arranged to receive the first end portion of the tubular part of the adjustment member, and a contact part with a smaller diameter than the escape part that is configured and arranged to contact with an outer peripheral surface of the fork column. In this case, it is possible to expand the range over which the adjustment of the bearing contact can be performed because the tip end of the tubular part can be disposed in the escape part of the second ring part.

In accordance with an eleventh aspect of the present invention, the first and second fastening members are formed as a one-piece, unitary member. Moreover, the first fastening member includes a first ring portion with the female screw part formed on the inner peripheral surface thereof. The second fastening member includes a second ring part and a second tightening part. The second ring part has a second ring portion with a bite part protruding in a radial inner direction configured and arranged to be attached to the fork column as the bite part engaging with the fork column, a second protruding portion extending from the second ring portion in a radial outer direction, and a second slit formed in the second protruding portion extending in the radial direction from an inner peripheral surface of the second ring portion to the second protruding portion. The second tightening part is disposed in the second protruding portion of the second ring part and configured and arranged to adjust a width of the second slit. In this state, the adjustment member is rotated to adjust the bearing contact, after which the second tightening part is tightened firmly. Here, the bicycle headset arrangement can be fastened adequately onto the fork column by a single fastening member.

In accordance with a twelfth aspect of the present invention, a seal member is further provided that is configured and arranged to cover the top bearing of the bicycle head tube. This arrangement makes it possible to prevent the incursion of contaminating materials into the bearing.

Accordingly, with the bicycle headset arrangement of the present invention, it is possible to adjust the bearings independently of the handle stem because the adjustment member and the first fastening member are disposed on the outer peripheral part of the fork column. This arrangement makes it easy to adjust the bearings. Moreover, because the tubular part of the adjustment member has the slots to facilitate the deformation of the tubular part towards the fork column, the adjustment member can be firmly attached to the fork column along with the first fastening member. Therefore, it is possible to firmly fasten the bicycle headset arrangement onto the fork column.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is an overall right side elevational view of a bicycle with a bicycle headset arrangement in accordance with a first embodiment of the present invention;
Figure 2 is an enlarged partial cross sectional view of a front head part of the bicycle including the bicycle headset arrangement in accordance with the first embodiment of the present invention;
Figure 3 is a perspective view illustrating an assembly of the bicycle headset arrangement in accordance with the first embodiment of the present invention;
Figure 4 is an enlarged perspective view illustrating the assembly of the bicycle headset arrangement in accordance with the first embodiment of the present invention;
Figure 5 is an enlarged partial cross sectional view of a front head part of a bicycle including a bicycle headset arrangement in accordance with a second embodiment of the present invention;
Figure 6 is an perspective view illustrating an assembly of the bicycle headset arrangement in accordance with the second embodiment of the present invention
Figure 7 is an enlarged perspective view illustrating the assembly of the bicycle headset arrangement in accordance with the second embodiment of the present invention;
Figure 8 is an enlarged exploded perspective view of a bicycle headset arrangement in accordance with a third embodiment of the present invention;
Figure 9 is an enlarged perspective view of a bicycle headset arrangement in accordance with a fourth embodiment of the present invention;
Figure 10 is an enlarged exploded perspective view of a bicycle headset arrangement in accordance with a fifth embodiment of the present invention;
Figure 11 is an enlarged perspective view of a bicycle headset arrangement in accordance with a sixth embodiment of the present invention; and
Figure 12 is an enlarged partial cross sectional view of a front head part of a bicycle including a bicycle headset arrangement in accordance with a seventh embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

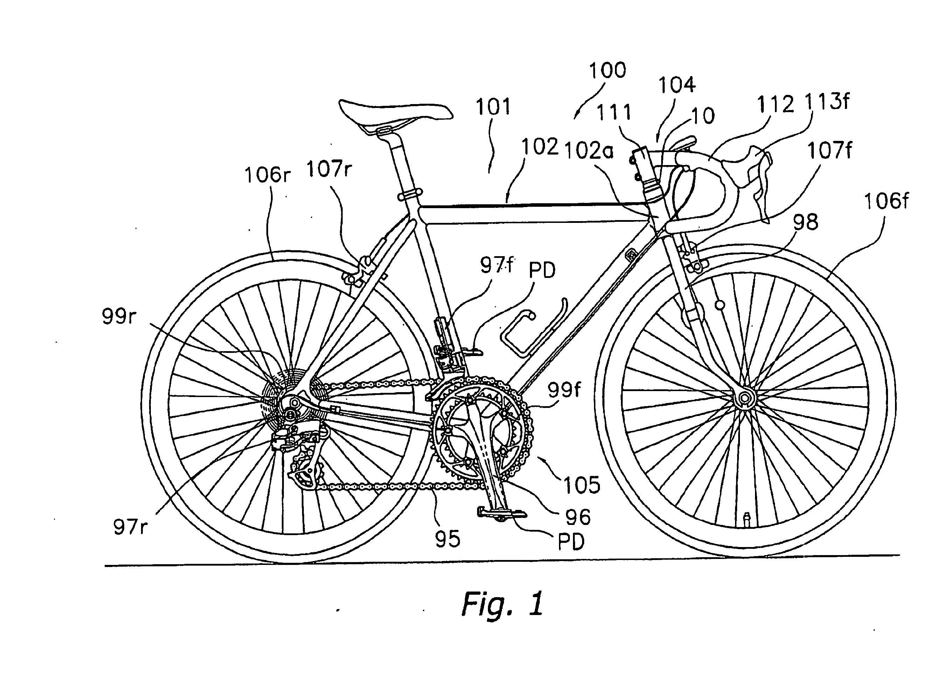

Referring initially to Figure 1, a bicycle 100 with a bicycle headset arrangement 10 is illustrated in accordance with a first embodiment of the present invention. The bicycle 100 is, for example, a road racer, and includes a front fork 98, a frame 101, a handle part 104, a drive unit 105, a pair of front and rear wheels 106f and 106r, and a pair of front and rear brake devices 107f and 107r. The frame 101 has a diamond-shaped frame unit 102 with a head tube 102a so that the front fork 98 is rotatably mounted in the head tube 102a. The handle part 104 is rigidly coupled to the front fork 98. The drive unit 105 comprises a crank 96 on which a chain 95 and a pedal PD are installed, a pair of front and rear derailleurs 97f and 97r, a pair of front and rear sprocket sets 99f and 99r, and other conventional components. The front and rear wheels 106f and 106r are installed on the front fork 98 and the back part of the frame 102, respectively.

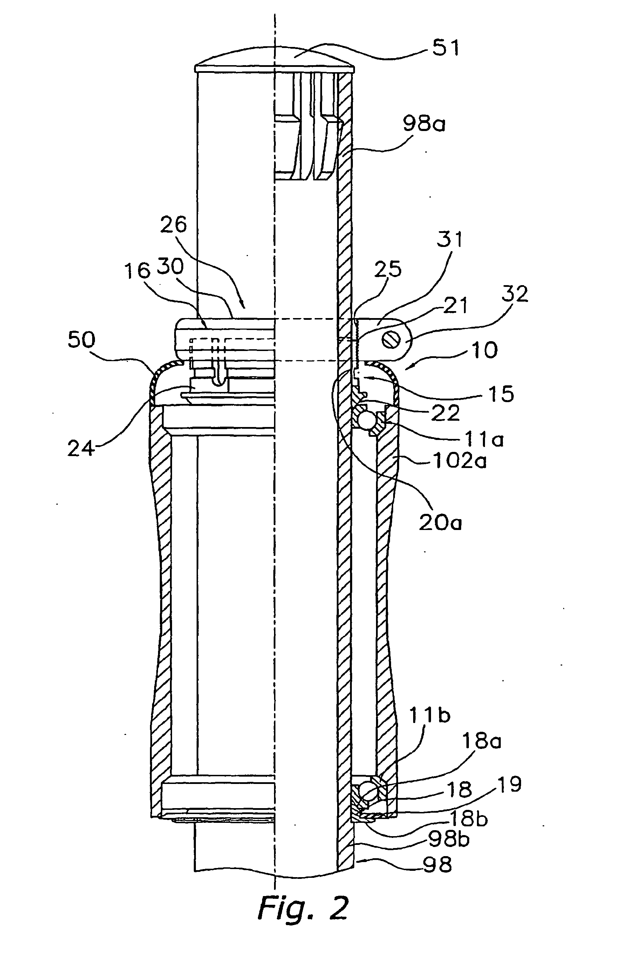

The handle part 104, as shown in Figure 1, comprises a handle stem 111 and a handle bar 112 which is fitted into, and firmly affixed to, the top end of the handle stem 111. The handle stem 111, as shown in Figures 1 and 2, fits with, and is securely fastened to, the top end part of a fork column or fork stem 98a at the top part of the front fork 98. The handle bar 112 is preferably a drop handle-type handle bar, and is provided with a pair of right brake lever 113f and left brake lever (not shown).

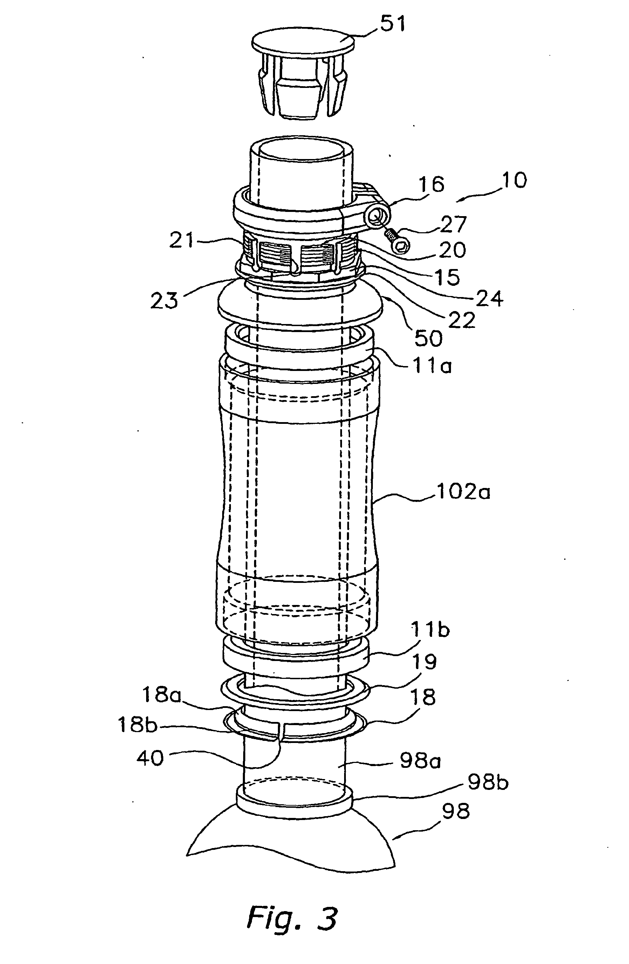

The front fork 98, as shown in Figures 2 and 3, is rotatably attached by the bicycle headset arrangement 10 of the first embodiment of the present invention to the head tube 102a disposed at the front part of the frame unit 102. Top and bottom ball bearing units 11a and 11b are disposed on both top and bottom ends of the head tube 102a, respectively. The bicycle headset arrangement 10 is configured and arranged to install the fork column 98a of the front fork 98 on the head tube 102a so that the head tube 102a is disposed between the bicycle headset arrangement 10 and a fork shoulder 98b formed on the front fork 98 below the fork column 98a as shown in Figure 2 while adjusting the ball contact or bearing play of the top and bottom bearing units 11a and 11b. The top part of the fork column 98a is preferably covered by a cap member 51. The cap member 51 is preferably made of a resilient material such as, for example, synthetic resin, so that the cap member 51 elastically interlocks on the outer peripheral surface of the fork column 98a.

In the first embodiment of the present invention, the bicycle headset arrangement 10, as shown in Figures 2, 3 and 4, basically comprises an adjustment member 15 and a first lock member 16 (an example of a first fastening member). The adjustment member 15 is configured and arranged to adjust the ball contacts of the ball bearing units 11a and 11b. The first lock member 16 abuts against the adjustment member 15, and configured and arranged to be securely fastened to the fork column 98. The bicycle headset arrangement 10 further comprises an attachment ring 18, a seal member 19 and a cover member 50. The attachment ring 18 contacts the bottom ball bearing unit 11b and the fork shoulder 98b at the bottom part of the head tube 102a. The seal member 19 is mounted on the attachment ring 18 and seals the bottom ball bearing unit 11b through contacting the bottom surface of the head tube 102a. The cover member 50 covers the outer peripheral side of the adjustment member 15 as seen in Figure 2.

The adjustment member 15 is preferably arranged as, for example, a metal member, and comprises a tubular part 20, a male screw part 21, a contact part 22, a plurality of slots 23, and a tool fitting part 24. The tubular part 20 is configured and arrange such that the fork column 98a can passes therethrough. The male screw part 21 is formed on the outer peripheral surface of the top end portion of the tubular part 20. The contact part 22 is formed at the bottom end portion of the tubular part 20, and is configured and arranged to make contact with the top ball bearing unit 11a disposed at the top part of the head tube 102a. The slots 23 that extend in the axial direction on the tubular part 20 where the male screw part 21 is formed as best seen in Figure 3. The slots 23 are spaced apart along the peripheral direction of the tubular part 20. The tool fitting part 24 is formed on the outer peripheral surface of the tubular part 20 between the male screw part 21 and the contact part 22.

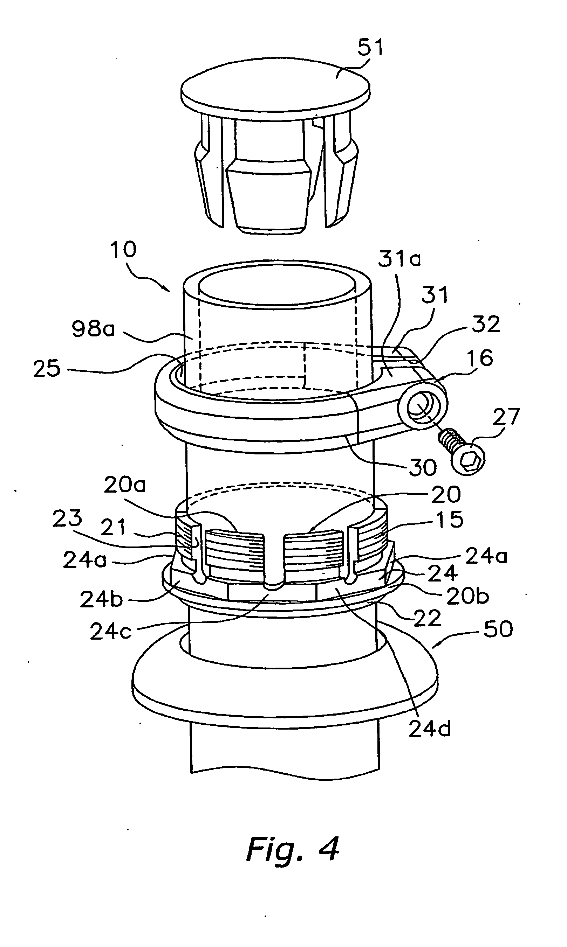

The tubular part 20 includes a through hole 20a, through which the fork column 98a can pass with enough of a gap. The through hole 20a for example has an inner diameter of approximately 28mm. The male screw part 21 is a screw with a size of about M32, and configured and arranged to mate with the first lock member 16. The contact part 22 is arranged with, for example, a tapered surface that is tapered toward downwardly. The contact part 22 is configured and arranged to make contact with the top ball bearing unit 11a to apply pressure to change the force that is applied to the top and bottom ball bearing units 11a and 11b in order to adjust the ball contacts of the ball bearing units 11a and 11b. The adjustment of the ball contact is performed in order to install the front fork 98 in the head tube 102a so that the front fork 98 can rotate smoothly without rattling. The slots 23 are, for example, eight slots that are equally spaced apart in the peripheral direction of the tubular part 20. The fabrication of these slots 23 makes it easier for the tubular part 20 where the male screw part 21 is formed to deform towards the center of the tubular part 20 (i.e., towards the fork column 98a. The tool fitting part 24 is provided so that a tool, such as a crescent wrench, can engage with the tool fitting part 24 in order to rotate the adjustment member 15. The tool fitting part 24 is formed with, for example, four sets of pairs of chamfered parts 24a, 24b, 24c and 24d arranged parallel to each other. A large-diameter flange part 20b is formed between the tool fitting part 24 and the contact part 22 as seen in Figure 4. The flange part 20b is formed in order to prevent the tool from slipping downward when the tool, such as a crescent wrench, is engaged with the tool fitting part 24. Therefore, it is easier to attach the tool to the tool fitting part 24.

As seen in Figure 2, the first lock member 16 has a female screw part 25 on the inner peripheral surface thereof. The female screw part 25 is configured and arranged to mate with the male screw part 21 of the adjustment member 15, and to be firmly attached to the fork column 98 through the application of pressure from the outer peripheral side to the tubular part 20. More specifically, the first lock member 16 has a first ring part 26 and a first tightening bolt 27 (first tightening part). The first ring part 26 comprises a first ring portion 30 with the female screw part 25 formed on the inner peripheral surface thereof, a first protruding portion 31, and a first slit 32. The first protruding portion 31 protrudes in an outer radial direction of the first ring portion 30. The first slit 32 is formed in the first protruding portion 31 extending in the radial direction from the first ring portion 30. The first tightening bolt 27 is disposed in the first protruding portion 31, and configured and arranged to adjust a width of the first slit 32.

The first ring portion 30 of the first ring part 26 of the first lock member 16 is configured and arranged to be mounted on the fork column 98a while the first lock member 16 is screwed to the adjustment member 15. As mentioned above, the first slit 32 extends in the radial direction from the inner peripheral surface of the first ring portion 30. The first slit 32 is provided in order to fasten the first lock member 16 to the fork column 98a, with the first ring portion 30 interposed therebetween.

The first tightening bolt 27 is, for example, a hexagon socket head bolt, and is disposed in the first protruding portion 31 in a direction that intersects the first slit 32. A through hole is formed on one side of the first slit 32 of the first protruding portion 31, through which the first tightening bolt 27 can pass. A countersink hole is also formed in the first protruding portion 31, which can accommodate the head of the first tightening bolt 27. A screw hole that mates with the first tightening bolt 27 is formed on the other side of the first slit 32 of the first protruding portion 32.

The attachment ring 18 is a ring-shaped member with a flange, comprising a contact part 18a formed on the top part thereof, and a ring shaped seal attachment groove 18b formed in the middle part thereof, and a slit 40 formed in the radial direction. The contact part 18a is configured and arranged to make contact with the bottom ball bearing unit 11b. The attachment ring 18 is restricted in its downward motion by a step that is formed at the fork shoulder 98b at the base end part of the fork column 98a. The contact part 18a is structured as a tapered surface that is tapered toward upward. As a result, when the top ball bearing unit 11a is pressed downwardly by the adjustment member 15, that force is propagated also to the bottom ball bearing unit 11b through the fork shoulder 98b to apply pressure thereto, making it possible to adjust the ball contacts of both of the ball bearing units 11a and 11b.

The seal member 19 is preferably a member made of an elastic material, such as nitryl rubber, with a ridged lip at the tip end thereof. The seal member 19 contacts, at the tip end lip part thereof, the bottom surface of the head tube 102a, and arranged to prevent the incursion of contaminating materials, including liquids, from the gap between the head tube 102a and the fork column 98a. Therefore, the ball bearing unit 11b is sealed by the seal member 19, making it possible to prevent the incursion of contaminating materials from the bottom side.

The cover member 50 is a member made of, for example, a rubber that can be stretched or compressed, and has an arced shape. The cover member 50 exposes the adjustment member 15 through reversing the bottom edge thereof until the installation of the front fork 98 has been completed, and when the installation of the front fork has been completed, the bottom edge is turned back over so that the cover member 50 is disposed on the top part of the head tube 102a, covering the adjustment member 15. Therefore, the ball bearing unit 11a is sealed.

The assembly procedures for installing the front fork 98 in the head tube 102a using the bicycle headset arrangement 10, structured as described above, will be explained.

Prior to assembly, preparations are made such as attaching the seal member 19 to the attachment ring 18, and screwing the first lock member 16 into the adjustment member 15. When the preparations have been completed, not only is the attachment ring 18 installed from above the fork column 98a to be brought into contact with the fork shoulder 98b, but also the ball bearing unit 11b is installed from above so as to contact the attachment ring 18 at the fork column 98a. In this state, the fork column 98a of the front fork 98 is installed through insertion into the head tube 102a from below, and the ball bearing unit 11b is installed at the bottom end of the head tube 102a.

Next, the adjustment member 15, onto which the ball bearing unit 11a and the first lock member 16 have been attached, is put on from above the fork column 98a, which has extended out of the head tube 102a, and the ball bearing unit 11a is installed in the specific position at the top edge of the head tube 102a. Moreover, the adjustment member 15 is lowered to the position wherein the contact part 22 makes contact with the ball bearing unit 11a. In this state, an appropriate support tool or the like, is used to prevent the first lock member 16 from rotating and from moving in the upwards direction. In this state, a tool such as a crescent wrench is attached to the tool fitting part 24 to rotate the adjustment member 15 in, for example, the counterclockwise direction. When this is done, the first lock member 16 is in a state wherein it is unable to rotate and wherein it is restricted in its movement in the upwards direction. Thus, the adjustment member 15 moves in the downwards direction, gradually increasing the force of the applied pressure to the ball bearing units 11a and 11b as gradually tightening the ball contacts of the ball bearing units 11a and 11b. Here, after the adjustment of the ball contact has been completed so that the front fork 98 rotates smoothly without rattling, the first tightening bolt 27 is then tightened in order to securely fasten the first lock member 16 to the fork column 98a. Because the slots 23 has been formed in the tubular part 20, when the first tightening bolt 27 is tightened, the tubular part 20 is tightened by the first ring portion 30, and the adjustment member 15 is held tightly in the fork column 98a, and is prevented from rotating. The result is that the first lock member 16 is rigidly attached to the fork column 98a.

When this operation has been completed, the cover member 50 is turned over and attached around the periphery of the adjustment member 15. After that, the handle stem 111 is installed at the top end of the fork column 98a at the desired height.

Here, the disposition of the adjustment member 15 and the first lock member 16 at the outer peripheral part of the fork column 98a makes it possible to adjust the ball contacts of the ball bearings 11a and 11b without installing the handle stem 111. Because of this, the ball contacts can be adjusted independently of the handle stem 111. Consequently, it is not only easy to adjust the vertical position of the handle part 104, but also easy to adjust the ball contacts of the ball bearing units 11a and 11b. Alternatively, in order to restrain the upward movement of the first lock member 16, the handle stem 111 may be rigidly attached to the fork column 98a in a state wherein the handle stem 111 is in contact with the first lock member 16, thereby constraining movement of the first lock member 16 in the upwards direction. Even in this case, the vertical position of the handle stem 111 can be adjusted easily even after the first lock member 16 has been attached to the fork column 98a. Furthermore, a separate member may be attached to the fork column 98a to restrict the upwards movement of the first lock member 16. In this case, the attached separated member may be removed after the ball contact adjustment has been completed. This makes it possible to eliminate unneeded components, thereby making the bicycle headset arrangement 10 lighter and more compact.

Furthermore, the slots 23 are formed in the tubular part 20 to facilitate easy deformation of the tubular part 20 towards the fork column 98a. Therefore, it is possible to secure the first lock member 16 to the fork column 98a and to securely attach the bicycle headset arrangement 10 to the fork column 98a.

### SECOND EMBODIMENT

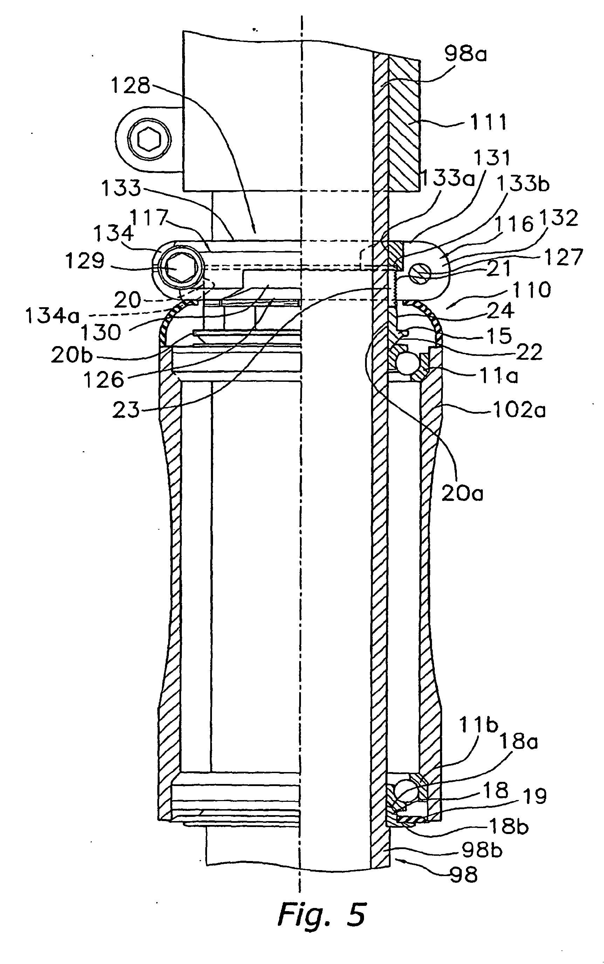

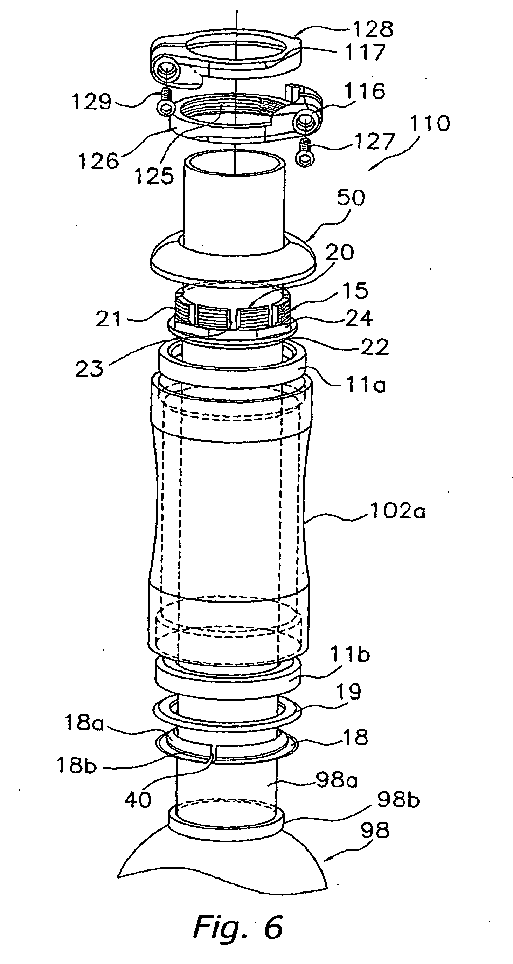

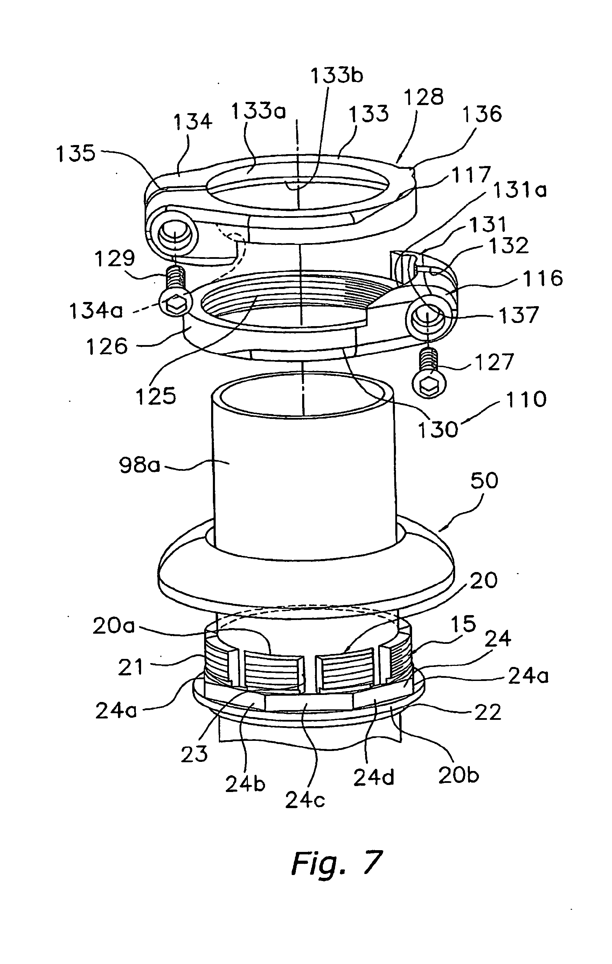

Referring now to Figures 5 to 7, a bicycle headset arrangement 110 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

The bicycle headset arrangement 110 of the second embodiment is basically identical to the bicycle headset arrangement 10 of the first embodiment except for the single first lock member 16 of the first embodiment is substituted with a pair of first and second lock members 116 and 117 in the second embodiment. More specifically, while in the first embodiment, the bicycle headset arrangement 10 is secured to the fork column 98a by the single first lock member 16, the bicycle headset arrangement 110 of the second embodiment may instead be secured to the fork column 98a by the first and second lock members 116 and 117, as shown in Figures 5 to 7.

The bicycle headset arrangement 110 according to the second embodiment of the present invention, as shown in Figures 5 to 7, comprises the adjustment member 15 for adjusting the ball contacts of the ball bearing units 11a and 11b, and the first and second lock members 116 and 117 (an example of the first and second fastening members), disposed lined up vertically at the top part of the adjustment member 15, and able to be secured to the fork column 98a. Moreover, the bicycle headset arrangement 110 has the attachment ring 18 that makes contact with the fork shoulder 98b and the ball bearing unit 11b at the bottom part of the head tuber 102a, the seal member 19 that is attached to the attachment ring 18 and that seals the ball bearing unit 11b by making contact with the bottom end of the head tube 102a, and the cover member 50 that covers the outer peripheral side of the adjustment member 15. The adjustment member 15 is the same as in the first embodiment, comprising the tubular part 20 through which the fork column 98a passes, the male screw part 21 that is formed on the outer peripheral surface of the top end of the tubular part 20, the contact part 22 that makes contact to the ball bearing unit 11a that is installed at the top part of the head tube 102a, formed at the bottom end of the tubular part 20, the slots 23 that extend in the axial direction in the part of the tubular part 20 wherein the male screw part 21 is formed as being spaced apart along the peripheral direction of the tubular part 20, and the tool fitting part 24 that is formed on the outer peripheral surface of the tubular part 20 between the male screw part 21 and the contact part 22. The detailed structures of the adjustment member 15 are the same as those in the first embodiment, and thus descriptions are omitted.

The first lock member 116 is non-rotatably disposed with respect the second lock member 117. The first lock member 116 includes a female screw part 125 formed on the inner peripheral side thereof and configured and arranged to mate with the male screw part 21 of the adjustment member 15. The first lock member 116 is configured and arranged to attach the tubular part 20 securely to the fork column 98a through the application of pressure from the outer peripheral side of the tubular part 20. The first lock member 116 comprises a first ring part 126 and a first tightening bolt 127. The first ring part 126 includes a first ring portion 130 with the female screw part 125 on the inner peripheral surface thereof, a first protruding portion 131 that protrudes in the outer radial direction of the first ring portion 130, and a first slit 132 that is formed in the first protruding portion 131. The first tightening member 127 is configured and arranged to adjust a width of the first slit 132 formed in the first protruding portion 131.

The first ring portion 130 can be installed on the fork column 98a while the first ring portion 130 is screwed into the adjustment member 15. The first protruding portion 131 has an axial thickness that is roughly twice that of the first ring portion 130, so that the top surface of the first protruding portion 131 is substantially planar with a top surface of the second ring portion 133 of the second lock member 117 as described below. A first indentation part 131a, which is indented in a circular arc shape that contacts the outer peripheral surface of the second ring portion 133, is formed in the first protruding portion 131 of the first lock member 116.

The first slit 131 is formed extending in the radial direction from the inner peripheral surface of the first ring portion 130, and is provided in order to attach the first lock member 116 to the fork column 98 by squeezing the first ring portion 130.

The first tightening bolt 127 is, for example, a hexagonal socket head bolt, and disposed in the first protruding portion 131 in a direction that intersects the first slit 132. A through hole is formed at one side of the first slit 132 of the first protruding portion 131, through which the first tightening bolt 127 passes, and a countersink hole is also formed in the first protruding portion 131, which can accommodate the head of the first tightening bolt 27. Moreover, a screw hole is formed on the other side of the first slit 132 of the first protruding portion 131, which mates with the first tightening bolt 127.

The second lock member 117 is configured and arranged to apply pressure to the fork column 98a, from the outer peripheral surface, from above the tubular part 120, and thus, to secure the fork column 98a. The second lock member 117 comprises a second ring part 128 and a second tightening bolt 129. The second ring part 128 includes a second ring portion 133 that is configured and arranged to be attached to the fork column 98a, a second protruding portion 134 that protrudes in the outer radial direction of the second ring portion 133, and a second slit 135 that is formed in the second protruding portion 134. The second ring portion 133 is non-rotatably arranged with relative to the first ring part 126. The second tightening bolt 129 is configured and arranged to tighten the width of the second slit 135 formed in the second protruding portion 134.

The second ring portion 133 has substantially the same axial thickness as the first ring portion 130 of the first lock member 116, and comprises an opening 133a that is formed on the inner peripheral side of the top part thereof so that the fork column 98a can pass therethrough. The second ring portion 133 further includes an escape part 133b that is configured and arranged to receive the tip end of the tubular part 20 of the adjustment member 15. The escape part 133b has a diameter that is larger than that of the opening 133a on the peripheral surface of the bottom part thereof as seen in Figure 5. The second protruding portion 134 has a thickness that is roughly twice that of the second ring portion 133 so that the bottom surface of the second protruding portion 134 is substantially planar with the bottom surface of the first ring portion 130 of the first ring member 126 of the first lock member 116. A second indentation part 134a, which is indented in a circular arc shape to make contact with the outer peripheral surface of the first ring portion 130 is formed in the second protruding portion 134.

A rotation stop indentation portion 137 is formed in a first indentation part 131a of the first protruding portion 131. A rotation stop protruding portion 136 is formed at the outer peripheral surface of the second ring portion 133, facing the first protruding portion 131, which protrudes in the outer radial direction to mate with the rotation stop indentation portion 137. This fitting of indentation and protrusion (e.g., the rotation stop indentation 137 and the rotation stop protrusion portion 136) prevents the rotation of the first ring part 126 of the first lock member 116 and the second ring part 128 of the second lock member 117. The rotation stop protruding portion 136 and the rotation stop indentation portion 137 are formed so that the first and second protruding portions 131 and 134 and the first and second slits 132 and 135 will face each other in the radial direction of the first and second ring portions 120 and 133.

The second slit 135 is formed extending in the radial direction from the inner peripheral surface of the second ring part 133. The second slit 135 is configured and arranged to securely fasten the second lock member 117 to the fork column 98a by squeezing the second ring portion 133.

The second attachment bolt 129 is, for example, a hexagonal socket head bolt, and disposed in the second protruding portion 134 in a direction that intersects the second slit 135. A through hole is formed on one side of the second slit 135 of the second protruding portion 134, through which the second tightening bolt 129 passes, and a countersink hole is also formed to accommodate the head of the second tightening bolt 129. Furthermore, the other side of the second slit 135 of the second protruding portion 134 is formed with a female screw hole that mates with the second tightening bolt 129.

The attachment ring 18, the seal member 19, and the cover member 50 have the same structure as in the first embodiment, and thus descriptions thereof are omitted.

The assembly process by which to attach the front fork 98 to the head tube 102a using the bicycle headset arrangement 110 as described above, will be explained next.

Prior to assembly, preparations are made such as not only attaching the seal member 19 to the attachment ring 18 and screwing the first lock member 116 into the adjustment member 15, but also attaching the second lock member 117 to the first lock member 116 in a rotation-locked state. When the preparations have been completed, not only is the attachment ring 18 attached from the top of the fork column 98a and caused to contact the fork shoulder 98b, but also the ball bearing unit 11b is installed on the fork column 98a, installed from above so as to make contact with the attachment ring 18. In this state, the fork column 98a of the front fork 98 is installed through insertion of the head tube 102a from the bottom side, and the ball bearing unit 11b is attached to the bottom end of the head tube 102a.

Next the ball bearing unit 11a and the adjustment member 15, to which the first and second lock members 116 and 117 have been attached, are inserted in this order from above the fork column 98a, which protrudes from the head tube 102a, to attach the ball bearing unit 11a at the top end of the head tube 102a. Moreover, the contact part 22 of the adjustment member 15 is lowered to a position where it comes into contact with the ball bearing unit 11a. In this state, the second tightening bolt 129 is tightened to securely fasten the second lock member 117 to the fork column 98a. By doing so, not only is the second lock member 117 securely fastened to the fork column 98a, but also a constraint is put on the upward movement of the first lock member 116, which is non-rotatably coupled to the second lock member 117. In this state, a tool, such as a crescent wrench, is attached to the tool fitting part 24 to rotate the adjustment member 15 in, for example, the counterclockwise direction. At this time, the first lock member 116 is non-rotatable and the upward movement of the first lock member 116 is restricted, and thus, the adjustment member 15 moves in the downward direction, gradually increasing the pressure that is applied to the ball bearing units 11a and 11b, gradually tightening the ball contacts of the ball bearing units 11a and 11b. Furthermore, when the adjustment of the ball contacts has been completed so that the front fork 98 rotates smoothly without rattling, then the first tightening bolt 127 is tightened. Because the slots 23 are formed in the tubular part 20 of the adjustment member 15, when the first tightening bolt 127 is tightened, the tubular part 20 is tightened by the first ring portion 130, and the adjustment member 15 is held tightly by the fork column 98a, preventing rotation. Therefore, the first lock member 116 is also fastened securely to the fork column 98a.

When these operations have been completed, the cover member 50 is attached about the periphery of the adjustment member 15. After this, the handle stem 111 is installed at the top end of the fork column 98a, at the desired height.

Accordingly, in the second embodiment of the present invention, the disposal of the adjustment member 15 and the first and second block members 116 and 117 at the outer peripheral part of the fork column 98a makes it possible to adjust the ball contacts of the ball bearings 11a and 11b without installing the handle stem 111. Therefore, the ball contacts can be adjusted independently of the handle stem 111. Consequently, not only are adjustments of the height of the handle part 104 easy, but adjustments of the ball contacts of the bearing units 11a and 11b are easy as well. Additionally, because the slots 23 are formed in the tubular part 20 to facilitate the deformation of the tubular part 20 towards the fork column 98a the first lock member 116 is securely fastened to the fork column 98a along with the second lock member 117, making it possible to securely fasten the fork column 98a to the bicycle headset arrangement 110.

Additionally, the first and second protruding portions 131 and 134, and the first and second slits 132 and 135 are disposed to face each other in the radial direction of the first and second ring portions 130 and 133 by the rotation stop protruding portion 136 and rotation stop indentation portion 137. Also, the first and second lock members 116 and 117 are arranged non-rotatable with respect to each other. In addition, the first and second ring portions 130 and 133 have axial thicknesses that are half of those of the first and second protruding portions 131 and 134, respectively. As a result, when compared to the structure wherein both of the first and second protruding portions are lined up with each other vertically, it is possible to reduce the overall thickness, and to achieve size and weight reductions, in the bicycle headset arrangement 110 without reducing the diameters of the tightening bolts 127 and 129.

In the second embodiment of the present invention, the second lock member 117 may be removed from the fork column 98a after the first lock member 116 has been secured after the ball contact adjustment has been completed. In this case, the second lock member 117 may be removed prior to attaching the handle stem 111.

### THIRD EMBODIMENT

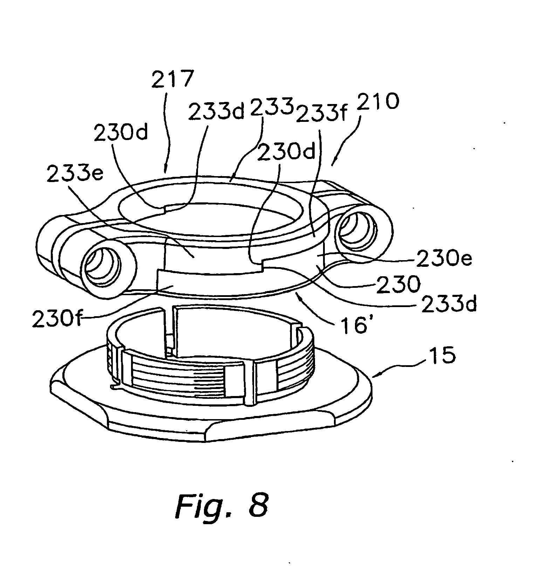

Referring now to Figure 8, a bicycle headset arrangement 210 in accordance with a third embodiment will now be explained. In view of the similarity between the second and third embodiments, the parts of the third embodiment that are identical to the parts of the second embodiment will be given the same reference numerals as the parts of the second embodiment. Moreover, the descriptions of the parts of the third embodiment that are identical to the parts of the second embodiment may be omitted for the sake of brevity.

The bicycle headset arrangement 210 of the third embodiment is basically identical to the bicycle headset arrangement 110 of the second embodiment except for the rotation stop structure provided in first and second lock member 216 and 217. More specifically, although in the second embodiment described above, the first lock member 116 and second lock member 117 are rotationally locked by the fitting of an indentation and a protrusion (i.e., the rotation stop indentation portion 137 and the rotation stop protrusion portion 136), the first and second lock members 216 and 217 of the third embodiment includes steps 230d and 233d, for example, formed on first and second ring portions 230 and 233 of the first and second lock members 216 and 217, respectively, as shown in Figure 8. Thus, the first and second lock members 216 and 217 are rotationally locked by the steps 230d and 233d.

In this case the steps 230d and 233d are preferably formed on the semicircular parts 230e and 230f, and 233e and 233f of the first and second ring portions 230 and 233, respectively. If, for example, the overall thickness T of the first and second lock members 216 and 217 is 10mm, then the first and second ring portions 230 and 233 are preferably formed with step by having the thickness of the semicircular parts 230e and 233e be thicker than half of the thickness (T/2) (for example, 6mm), and the thickness of the other semicircular parts 230f and 233f be equal to the value of the overall thickness T minus the thickness of the other semicircular parts 230e and 233e (for example, 4mm).

### FOURTH EMBODIMENT

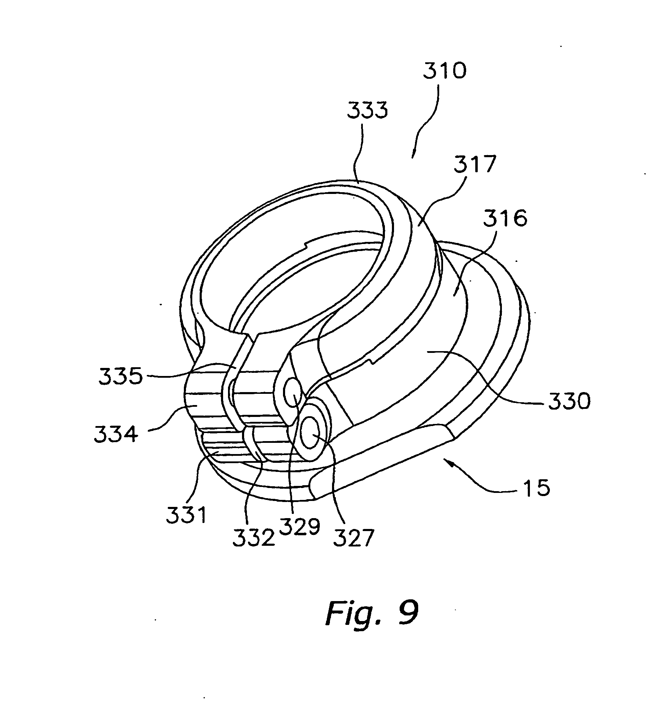

Referring now to Figure 9, a bicycle headset arrangement 310 in accordance with a fourth embodiment will now be explained. In view of the similarity between the second and fourth embodiments, the parts of the fourth embodiment that are identical to the parts of the second embodiment will be given the same reference numerals as the parts of the second embodiment. Moreover, the descriptions of the parts of the fourth embodiment that are identical to the parts of the second embodiment may be omitted for the sake of brevity.

The bicycle headset arrangement 310 of the fourth embodiment is basically identical to the bicycle headset arrangement 110 of the second embodiment except that in the fourth embodiment, first and second lock members 316 and 317 are arranged so that first and second protruding portions 331 and 334 are vertically aligned in the axial direction. More specifically, although in the second embodiment described above, the first and second block members 116 and 117 are disposed to face each other in the radial direction, the first and second protruding portions 331 and 334 of the fourth embodiment are lined up vertically with each other in the same position in the radial direction of the first and second lock members 316 and 317, as shown in Figure 9.

Accordingly, with the fourth embodiment of the present invention, the tightening operations of first and second tightening bolts 327 and 329 are facilitated because the first and second tightening bolts 327 and 329 for reducing the width of first and second slits 332 and 335 are positioned in the same positions in the peripheral direction of the first and second lock members 316 and 317.

### FIFTH EMBODIMENT

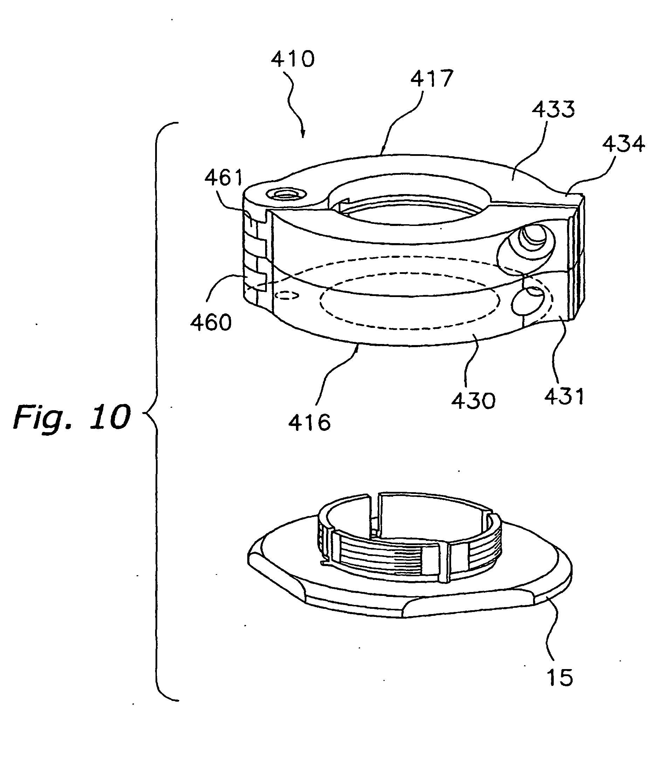

Referring now to Figure 10, a bicycle headset arrangement 410 in accordance with a fifth embodiment will now be explained. In view of the similarity between the fourth and fifth embodiments, the parts of the fifth embodiment that are identical to the parts of the fourth embodiment will be given the same reference numerals as the parts of the fourth embodiment. Moreover, the descriptions of the parts of the fifth embodiment that are identical to the parts of the fourth embodiment may be omitted for the sake of brevity.

The bicycle headset arrangement 410 of the fifth embodiment is basically identical to the bicycle headset arrangement 310 of the fourth embodiment except that first and second right portions 430 and 433 of first and second lock members 416 and 417 of the fifth embodiment are provided with first and second hinge parts 460 and 461, respectively, as shown in Figure 10.

In the fifth embodiment, the first and second ring portions 430 and 433 can open and close by the first and second hinge parts 460 and 461, and thus, making it easy to attach and remove the first and second ring portions 430 and 433. In the fifth embodiment too, the second lock member 417 may be removed from the fork column 98a after the first lock member 416 has been securely fastened after the ball contact adjustment has been completed. In such a case, since the second hinge part 461 is provided in the second lock member 417, the second lock member 417 can be removed even after the handle stem 111 has been installed.

### SIXTH EMBODIMENT

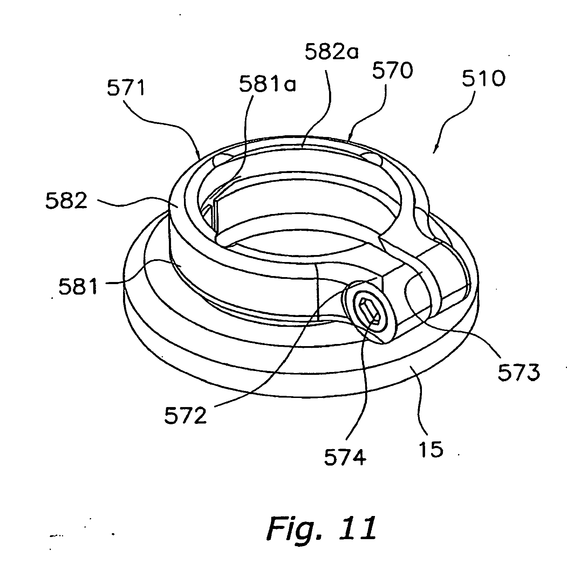

Referring now to Figure 11, a bicycle headset arrangement 510 in accordance with a sixth embodiment will now be explained. In view of the similarity between the first and sixth embodiments, the parts of the sixth embodiment that are identical to the parts of the first embodiment will be given the same reference numerals as the parts of the first embodiment. Moreover, the descriptions of the parts of the sixth embodiment that are identical to the parts of the first embodiment may be omitted for the sake of brevity.

The bicycle headset arrangement 510 of the sixth embodiment is basically identical to the bicycle headset arrangement 10 of the first embodiment, except for the first lock member 16 is substituted by a lock member 570.

In the first embodiment described above, only the first fastening member of the present invention is structure by the first lock member 16 without the first lock member 16 contacting the fork column 98 directly. However, in the sixth embodiment as shown in Figure 11, first and second fastening members may be structured by the single lock member 570. Specifically, the single lock member 570 basically comprises a single ring part 571, a protruding portion 572, a slit 573 a tightening bolt 574. The ring part 571 includes a lower or first ring portion 581, and an upper or second ring portion 582 that are formed together as a one-piece, unitary member. Thus, in this embodiment, the first and second fastening members are basically defined by the first and second ring portions 581 and 582, respectively, of the single ring part 571 with the first and second fastening members sharing the same protruding portion 572 with the slit 573 and the tightening bolt 574. The ring portion 582 has a bite part 582a that protrudes from the inner surface of the ring portion 582 in the inner radial direction, and configured and arranged to directly attach to the fork column 98a as the bite part 582a bites into the fork column 98a. The protruding portion 572 protrudes in the outer radial direction of the ring part 571. The slit 573 is formed extending in the radial direction from the inner radial part of the ring part 571 to the protruding portion 572. The fastening bolt 574 is disposed in the protruding portion 572 for adjustment the width of the slit 573. The first fastening member comprises the first ring portion 581 that is formed integrally with the second ring portion 582 (second fastening member). The first ring portion 581 includes a female screw part 581a on the inner peripheral surface thereof for threadedly engaging the adjustment member 15 in the same manner as the first embodiment.

In the sixth embodiment of the present invention, when the tightening bolt 574 is tightened slightly, the bite part 582a bites into the fork column 98a. In this state, the ball contacts of the ball bearings 11a and 11b are adjusted by the adjustment member 15, and finally the tightening bolt 574 is tightened to securely fasten the lock member 570.

### SEVENTH EMBODIMENT

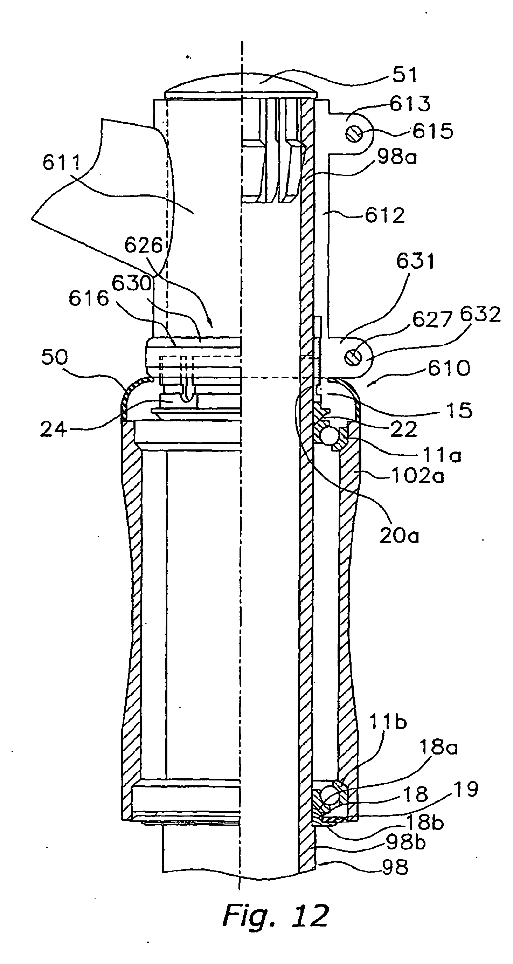

Referring now to Figure 12, a bicycle headset arrangement 610 in accordance with a seventh embodiment will now be explained. In view of the similarity between the first and seventh embodiments, the parts of the seventh embodiment that are identical to the parts of the first embodiment will be given the same reference numerals as the parts of the first embodiment. Moreover, the descriptions of the parts of the seventh embodiment that are identical to the parts of the first embodiment may be omitted for the sake of brevity.

The bicycle headset arrangement 610 of the seventh embodiment is basically identical to the bicycle headset arrangement 10 of the first embodiment except that a first lock member 616 of the seventh embodiment is integrally formed with a handle stem 611 (additional ring portion) as shown in Figure 12.

In the seventh embodiment, the handle stem 611 has a slit 612 (additional slit) that is continuously formed with a first slit 632 of the first lock member 616. The handle stem 611 also includes a protruding portion 613 (additional protruding portion) that protrudes in the outer radial direction at the top part of the handle stem 611. A tightening bolt 615 (additional tightening bolt 615) for adjusting the width of the slit 612 is attached to the protruding portion 613.

In the seventh embodiment, the fork column 98a is attached in a state wherein the handle stem 611 is screwed into the adjustment member 15, and with the tightening bolt 615 in a tightened state, the adjustment member 15 is rotated to adjust the ball contacts of the ball bearings 11a and 11b. Moreover, when the adjustment of the ball contacts have been completed, a first tightening bolt 627 disposed in the first protruding portion 632 is tightened to complete the installation. In this case, not only is the attachment of the handle stem 611 done simultaneously with the attachment of the front fork 98, but, in total, it is possible to reduce the weight and complexity of the components as a whole.

While in the embodiments described above, the ball bearings 11a and 11b are used for an illustration of the bearings, the bearings used with the bicycle headset arrangement of the present invention are not limited to ball bearings. Rather, the bearings can be structured in any form, such as needle bearings, or the like, insofar as they are rotational bearings that have rotational units.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle headset arrangement (10, 110, 210, 310, 410, 510, 610) for attaching a fork column (98a) to a head tube (102a) with a pair of top and bottom bearings (11a, 11b) disposed in top and bottom ends thereof, the bicycle headset arrangement comprising: an adjustment member (15) including
a tubular part (20, 120) with a male screw part (21) formed on an outer peripheral surface of a first axial end portion of the tubular part (20, 120), the tubular part (20, 120) being
configured and arranged such that the fork column (98a) passes through the tubular part (20, 120),
a contact part (22) disposed in a second axial end portion of the tubular part (20, 120), and configured and arranged to contact with the top bearing (11a) of the head tube (102a), and
a plurality of slots (23) formed in the first axial end portion of the tubular part (20, 120) to extend in the axial direction of the tubular part (20, 120) as the slots being spaced apart in a peripheral direction of the tubular part (20, 120); and
a first fastening member (16) with a female screw part (25) formed on an inner peripheral surface thereof that is configured and arranged to engage the male screw part (21) of the adjustment member (15), the first fastening member (16) being configured and arranged to press the tubular part (20, 120) of the adjustment member (15) from an outer peripheral side of the tubular part (20, 120) to securely fasten the adjustment member (15) to the bicycle fork column (98a).

2. The bicycle headset arrangement (10, 110, 210, 310, 410, 510, 610) as recited in claim 1, wherein
the first fastening member (16) comprises
a first ring part (26) having a first ring portion (30) with the female screw part (25) formed on an inner peripheral surface thereof, a first protruding portion (31) extending from the first ring portion (30) in a radial outer direction, an a first slit (32) formed in the first protruding portion (31) extending in the radial direction from the inner peripheral surface of the first ring portion (30) to the first protruding portion (31); and
a first tightening part (27) disposed in the first protruding portion (31) of the first ring part (25); and configured and arranged to adjust a width of the first slit (32).

3. The bicycle headset arrangement (10, 110, 210, 310, 410, 510, 610) as recited in claim 1 or 2, further comprising
a second fastening member configured and arranged to be securely fastened to the bicycle fork column (98a) above the tubular part (20, 120) of the adjustment member (15) by pressing an outer peripheral surface of the bicycle fork column (98a), the second fastening member being configured and arranged to be non-rotatable with respect to the first fastening member.

4. The bicycle headset arrangement (10, 110, 210, 310, 410, 510, 610) as recited in claim 3, wherein
the second fastening member comprises
a second ring part having a second ring portion configured and arranged to be attached to the bicycle fork column (98a), a second protruding portion extending from the second ring portion in a radial outer direction, and a second slit formed in the second protruding portion extending in the radial direction from an inner peripheral surface of the second ring portion to the second protruding portion; and
a second tightening part disposed in the second protruding portion of the second ring part and configured and arranged to adjust a width of the second slit.

5. The bicycle headset arrangement (10, 110, 210, 310, 410, 510, 610) as recited in claim 3 or 4, wherein
the first and second fastening members are configured and arranged to be disposed with respect to each other so that the first and second slits are disposed opposite sides in a radial direction of the first and second ring portions.

6. The bicycle headset arrangement (10, 110, 210, 310, 410, 510, 610) as recited in claim 5, wherein
the first and second fastening members are configured and arranged to be disposed with respect to each other so that the first and second tightening parts are disposed opposite sides in the radial direction of the first and second ring portions.

7. The bicycle headset arrangement (10, 110, 210, 310, 410, 510, 610) as recited in claim 3, wherein
the first and second fastening members are configured and arranged to be disposed with respect to each other so that the first and second slits are aligned in an axial direction of the first and second ring portions.

8. The bicycle headset arrangement (10, 110, 210, 310, 410, 510, 610) as recited in claim 7, wherein
the first and second ring portions further include first and second hinge parts (460, 461), respectively, that are configured and arranged to open and close the first and second ring portions.

9. The bicycle headset arrangement (10, 110, 210, 310, 410, 510, 610) as recited in claim 4, wherein
the first and second ring portions include step structures to prevent a relative rotation between the first and second ring parts.

10. The bicycle headset arrangement (10, 110, 210, 310, 410, 510, 610) as recited in claim 4, wherein
the first and second ring portions include a structure with a radial protrusion and a radial indentation to prevent relative rotation between the first and second ring parts by engaging the radial protrusion with the radial indentation.

11. The bicycle headset arrangement (10, 110, 210, 310, 410, 510, 610) as recited in claim 4, wherein
the second ring portion includes an escape part (133b) configured and arranged to receive the first end portion of the tubular part (20, 120) of the adjustment member (15), and a contact part (22) with a smaller diameter than the escape part (133b) that is configured and arranged to contact with an outer peripheral surface of the fork column (98a).

12. The bicycle headset arrangement (10, 110, 210, 310, 410, 510, 610) as recited in claim 3, wherein
the first and second fastening members are formed as a one-piece, unitary member.

13. The bicycle headset arrangement (10, 110, 210, 310, 410, 510, 610) as recited in claim 12, wherein
the first and second fastening members are formed together a single ring part (571) with a protruding portion (572) extending from the single ring part (571) in a radial outer direction, and a slit being formed in the protruding portion (572) that extends in the radial direction from an inner peripheral surface of the ring part (571) to the protruding portion (572),
the single ring part (571) including a first ring portion with the female screw part (581 a) formed on the inner peripheral surface thereof, a second ring portion having a bite part protruding in a radial inner direction and configured and arranged to be attached to the fork column (98a) as the bite part engaging with the fork column (98a), and
the protruding portion (572) including a tightening part configured and arranged to adjust a width of the second slit.

14. The bicycle headset arrangement (10, 110, 210, 310, 410, 510, 610) as recited in any of the preceding claims, further comprising
a seal member (19) configured and arranged to cover the top bearing of the bicycle head tube (102a).

15. The bicycle headset arrangement (10, 110, 210, 310, 410, 510, 610) as recited in claim 2, wherein
the first fastening member is integrally formed with a handle stem (611) of the bicycle.

16. The bicycle headset arrangement (10, 110, 210, 310, 410, 510, 610) as recited in claim 2, wherein
the first fastening member further includes
an additional ring portion (611) integrally formed with the first ring portion, and configured and arranged to be attached to the bicycle fork column (98a),
an additional protruding portion (613) extending from the additional ring portion (611) in a radial outer direction, the additional protruding portion (613) being disposed axially upwardly with respect to the first protruding portion, the additional protruding portion (613) including an additional slit (612) extending in the radial direction from an inner peripheral surface of the additional ring portion (611), and
an additional tightening part (615) disposed in the additional protruding portion (613), and configured and arranged to adjust a width of the additional slit (612).

## Patentansprüche

1. Fahrrad-Steuerkopfsatzanordnung (10, 110, 210, 310, 410, 510, 610) zum Befestigen eines Gabelrohrs (98a) an einem Steuerkopfrohr (102a) mit einem Paar von oberen und unteren Lagern (11a, 11b), die am oberen und unteren Ende von diesem angeordnet sind, wobei die Fahrrad-Steuerkopfsatzanordnung aufweist:
ein Einstellelement (15), beinhaltend
ein rohrförmiges Teil (20, 120) mit einem Außengewindeteil (21), das auf einer Außenumfangsfläche eines ersten axialen Endabschnittes des rohrförmigen Teils (20, 120) ausgebildet ist, wobei das rohrförmige Teil (20, 120) derart konfiguriert und angeordnet ist, dass das Gabelrohr (98a) durch den rohrförmigen Teil (20, 120) hindurch verläuft,
einen Kontaktteil (22), der sich in einem zweiten axialen Endabschnitt des rohrförmigen Teils (20, 120) befindet und so konfiguriert und angeordnet ist, dass er mit dem oberen Lager (11a) des Steuerkopfrohrs (102a) in Kontakt ist, und
eine Mehrzahl von Schlitzen (23), die im ersten axialen Endabschnitt des rohrförmigen Teils (20, 120) so ausgebildet sind, dass sie sich in axialer Richtung des rohrförmigen Teils (20, 120) erstrecken, wobei die Schlitze beabstandet in Umfangsrichtung des rohrförmigen Teils (20, 120) angeordnet sind; und
ein erstes Befestigungselement (16), in dessen Innenumfangsfläche ein Innengewindeteil (25) ausgebildet ist, der konfiguriert und angeordnet ist, um mit dem Außengewindeteil (21) des Einstellelementes (15) in Eingriff zu kommen, wobei das erste Befestigungselement (16) so konfiguriert und angeordnet ist, dass es auf den rohrförmigen Teil (20, 120) des Einstellelementes (15) von einer Außenumfangsseite des rohrförmigen Teils (20, 120) her Druck ausübt, um das Einstellelement (15) am Fahrradgabelrohr (98a) fest anzubringen.

2. Fahrrad-Steuerkopfsatzanordnung (10, 110, 210, 310, 410, 510, 610) nach Anspruch 1, bei der
das erste Befestigungselement (16) beinhaltet
einen ersten Ringteil (26), der einen ersten Ringabschnitt (30), auf dessen Innenumfangsfläche der Innengewindeteil (25) ausgebildet ist, einen ersten vorstehenden Abschnitt (31), der sich vom ersten Ringabschnitt (30) in Richtung radial nach außen erstreckt, und einen ersten Schlitz (32) aufweist, der im ersten vorstehenden Abschnitt (31) ausgebildet ist und sich in radialer Richtung von der Innenumfangsfläche des ersten Ringabschnittes (30) zum ersten vorstehenden Abschnitt (31) hin erstreckt, und
ein erstes Festspannteil (27), das im ersten vorstehenden Abschnitt (31) des ersten Ringteils (26) ausgebildet ist, und konfiguriert und angeordnet ist, um eine Breite des ersten Schlitzes (32) einzustellen.

3. Fahrrad-Steuerkopfsatzanordnung (10, 110, 210, 310, 410, 510, 610) nach Anspruch 1 oder 2, die weiter aufweist,
ein zweites Befestigungselement, das konfiguriert und angeordnet ist, um an dem Fahrradgabelrohr (98a) oberhalb des rohrförmigen Teils (20, 120) des Einstellelementes (15) sicher befestigt zu werden, und zwar durch Druck-Ausüben auf eine Außenumfangsfläche des Fahrradgabelrohrs (98a), wobei das zweite Befestigungselement so konfiguriert und angeordnet ist, dass es bezüglich des ersten Befestigungselementes nicht-drehbar ist.

4. Fahrrad-Steuerkopfsatzanordnung (10, 110, 210, 310, 410, 510, 610) nach Anspruch 3, bei der
das zweite Befestigungselement beinhaltet
einen zweiten Ringteil, der einen zweiten Ringabschnitt, der konfiguriert und angeordnet ist, um am Fahrradgabelrohr (98a) befestigt zu werden, einen zweiten vorstehenden Abschnitt, der sich vom zweiten Ringabschnitt in Richtung radial nach außen erstreckt, und einen zweiten Schlitz aufweist, der im zweiten vorstehenden Abschnitt ausgebildet ist und sich in radialer Richtung von einer Innenumfangsfläche des zweiten Ringabschnittes zum zweiten vorstehenden Abschnitt hin erstreckt; und
ein zweites Festspannteil, das sich im zweiten vorstehenden Abschnitt des zweiten Ringteils befindet, und konfiguriert und angeordnet ist, um eine Breite des zweiten Schlitzes einzustellen.

5. Fahrrad-Steuerkopfsatzanordnung (10, 110, 210, 310, 410, 510, 610) nach Anspruch 3 oder 4, bei der
die ersten und zweiten Befestigungselemente so konfiguriert und angeordnet sind, dass sie bezüglich zueinander so angeordnet sind, dass die ersten und zweiten Schlitze in einer Radialrichtung der ersten und zweiten Ringabschnitte an entgegengesetzten Seiten angeordnet sind.

6. Fahrrad-Steuerkopfsatzanordnung (10, 110, 210, 310, 410, 510, 610) nach Anspruch 5, bei der
die ersten und zweiten Befestigungselemente so konfiguriert und angeordnet sind, dass sie bezüglich zueinander so angeordnet sind, dass die ersten und zweiten Festspannteile in Radialrichtung der ersten und zweiten Ringabschnitte an entgegengesetzten Seiten angeordnet sind.

7. Fahrrad-Steuerkopfsatzanordnung (10, 110, 210, 310, 410, 510, 610) nach Anspruch 3, bei der
die ersten und zweiten Befestigungselemente so konfiguriert und angeordnet sind, dass sie bezüglich zueinander so angeordnet sind, dass die ersten und zweiten Schlitze in Axialrichtung der ersten und zweiten Ringabschnitte fluchten.

8. Fahrrad-Steuerkopfsatzanordnung (10, 110, 210, 310, 410, 510, 610) nach Anspruch 7, bei der
die ersten und zweiten Ringabschnitte weiter erste bzw. zweite Drehgelenkteile (460, 461) beinhalten, die konfiguriert und angeordnet sind, um die ersten und zweiten Ringabschnitte zu öffnen und zu schließen.

9. Fahrrad-Steuerkopfsatzanordnung (10, 110, 210, 310, 410, 510, 610) nach Anspruch 4, bei der
die ersten und zweiten Ringabschnitte Stufenstrukturen beinhalten, um eine Relativdrehung zwischen den ersten und zweiten Ringteilen zu verhindern.

10. Fahrrad-Steuerkopfsatzanordnung (10, 110, 210, 310, 410, 510, 610) nach Anspruch 4, bei der
die ersten und zweiten Ringabschnitte eine Struktur mit einem radialen Vorsprung und einer radialen Vertiefung beinhalten, um eine Relativdrehung zwischen den ersten und zweiten Ringteilen durch In-Eingriff-Kommen des radialen Vorsprungs mit der radialen Vertiefung zu verhindern.

11. Fahrrad-Steuerkopfsatzanordnung (10, 110, 210, 310, 410, 510, 610) nach Anspruch 4, bei der
der zweite Ringabschnitt einen Entweichungsteil (133b) beinhaltet, der konfiguriert und angeordnet ist, um den ersten Endabschnitt des rohrförmigen Teils (20, 120) des Einstellelementes (15) aufzunehmen, und ein Kontaktteil (22) beinhaltet, dessen Durchmesser geringer ist als der des Entweichungsteils (133b) und der konfiguriert und angeordnet ist, um mit einer Außenumfangsfläche des Gabelrohrs (98a) in Kontakt zu stehen.

12. Fahrrad-Steuerkopfsatzanordnung (10, 110, 210, 310, 410, 510, 610) nach Anspruch 3, bei der
die ersten und zweiten Befestigungselemente als einstückiges unitäres Element ausgebildet sind.

13. Fahrrad-Steuerkopfsatzanordnung (10, 110, 210, 310, 410, 510, 610) nach Anspruch 12, bei der
die ersten und zweiten Befestigungselemente gemeinsam zu einem einzigen Ringteil (571) ausgebildet sind, wobei sich ein vorstehender Abschnitt (572) von dem einzigen Ringteil (571) in Richtung radial nach außen erstreckt, und ein Schlitz im vorstehenden Abschnitt (572) ausgebildet ist, der sich in radialer Richtung von einer Innenumfangsfläche des Ringteils (571) zum vorstehenden Abschnitt (572) erstreckt,
wobei der einzige Ringteil (571) einen ersten Ringabschnitt, an dessen Innenumfangsfläche der Innengewindeteil (581 a) ausgebildet ist, und einen zweiten Ringabschnitt beinhaltet, der einen in Richtung radial nach innen vorstehenden Greifteil aufweist und der konfiguriert und angeordnet ist, um am Gabelrohr (98a) befestigt zu werden, da der Greifteil mit dem Gabelrohr (98a) in Eingriff kommt, und
der vorstehende Abschnitt (572) einen Festspannteil beinhaltet, der konfiguriert und angeordnet ist, um eine Breite des zweiten Schlitzes einzustellen.

14. Fahrrad-Steuerkopfsatzanordnung (10, 110, 210, 310, 410, 510, 610) nach einem der vorhergehenden Ansprüche, weiter aufweisend
ein Abdichtungselement (19), das konfiguriert und angeordnet ist, um das obere Lager des Fahrrad-Steuerkopfrohrs (102a) abzudecken.

15. Fahrrad-Steuerkopfsatzanordnung (10, 110, 210, 310, 410, 510, 610) nach Anspruch 2, bei der
das erste Befestigungselement integral mit einem Lenkervorbau (611) des Fahrrades ausgebildet ist.

16. Fahrrad-Steuerkopfsatzanordnung (10, 110, 210, 310, 410, 510, 610) nach Anspruch 2, bei der
das erste Befestigungselement weiter beinhaltet
einen zusätzlichen Ringabschnitt (611), der integral mit dem ersten Ringabschnitt ausgebildet ist und der konfiguriert und angeordnet ist, um am Fahrradgabelrohr (98a) befestigt zu werden,
einen zusätzlichen vorstehenden Abschnitt (613), der sich vom zusätzlichen Ringabschnitt (611) in Richtung radial nach außen erstreckt, wobei der zusätzliche vorstehende Abschnitt (613) axial nach oben bezüglich des ersten vorstehenden Abschnittes angeordnet ist, wobei der zusätzliche vorstehende Abschnitt (613) einen zusätzlichen Schlitz (612) beinhaltet, der sich von einer Innenumfangsfläche des zusätzlichen Ringabschnittes (610) in radialer Richtung erstreckt, und
einen zusätzlichen Festspannteil (615), der sich im zusätzlichen vorstehenden Abschnitt (613) befindet und der konfiguriert und angeordnet ist, um eine Breite des zusätzlichen Schlitzes (612) einzustellen.

## Revendications

1. Jeu de direction (10, 110, 210, 310, 410, 510, 610) pour bicyclette pour fixer une colonne de fourche (98a) à un tube de direction (102a) avec une paire de roulements supérieur et inférieur (11a, 11b) disposés dans leurs extrémités supérieure et
inférieure, le jeu de direction pour bicyclette comprenant :
un élément d'ajustement (15) comprenant :
une partie tubulaire (20, 120) avec une partie de vis mâle (21) formée sur une surface périphérique externe d'une première partie d'extrémité axiale de la partie tubulaire (20, 120), la partie tubulaire (20, 120) étant configurée et agencée de sorte que la colonne de fourche (98a) passe à travers la partie tubulaire (20, 120),
une partie de contact (22) disposée dans la seconde partie d'extrémité axiale de la partie tubulaire (20, 120), et configurée et agencée pour être en contact avec le roulement supérieur (11a) du tube de direction (102a), et
une pluralité de fentes (23) formées dans la première partie d'extrémité axiale de la partie tubulaire (20, 120) pour s'étendre dans la direction axiale de la partie tubulaire (20, 120) lorsque les fentes sont espacées dans une direction périphérique de la partie tubulaire (20, 120) ; et
un premier élément de fixation (16) avec une partie de vis femelle (25) formée sur sa surface périphérique interne qui est configurée et agencée pour mettre en prise la partie de vis mâle (21) de l'élément d'ajustement (15), le premier élément de fixation (16) étant configuré et agencé pour comprimer la partie tubulaire (20, 120) de l'élément d'ajustement (15) à partir d'un côté périphérique externe de la partie tubulaire (20, 120) pour fixer de manière sûre l'élément d'ajustement (15) sur la colonne de fourche (98a) de bicyclette.

2. Jeu de direction (10, 110, 210, 310, 410, 510, 610) pour bicyclette selon la revendication 1, dans lequel :
le premier élément de fixation (16) comprend :
une première partie annulaire (26) ayant une première partie annulaire (30) avec une partie de vis femelle (25) formée sur sa surface périphérique interne, une première partie en saillie (31) s'étendant à partir de la première partie annulaire (30) dans une direction externe radiale, et une première fente (32) formée dans la première partie en saillie (31) s'étendant dans la direction radiale à partir de la surface périphérique interne de la première partie annulaire (30) jusqu'à la première partie en saillie (31), et
une première partie de serrage (27) disposée dans la première partie en saillie (31) de la première partie annulaire (26) et configurée et agencée pour ajuster une largeur de la première fente (32).

3. Jeu de direction (10, 110, 210, 310, 410, 510, 610) pour bicyclette selon la revendication 1 ou 2, comprenant en outre :
un premier élément de fixation configuré et agencé pour être fixé de manière fixe à la colonne de fourche (98a) de bicyclette au-dessus de la partie tubulaire (20, 120) de l'élément d'ajustement (15) en comprimant une surface périphérique externe de la colonne de fourche (98a) de bicyclette, le second élément de fixation étant configuré et agencé pour être non rotatif par rapport au premier élément de fixation.

4. Jeu de direction (10, 110, 210, 310, 410, 510, 610) pour bicyclette selon la revendication 3, dans lequel le second élément de fixation comprend :
une seconde partie annulaire ayant une seconde partie annulaire configurée et agencée pour être fixée à la colonne de fourche (98a) de bicyclette, une seconde partie en saillie s'étendant à partir de la seconde partie annulaire dans une direction externe radiale, et une seconde fente formée dans la seconde partie en saillie s'étendant dans la direction radiale à partir d'une surface périphérique interne de la seconde partie annulaire vers la seconde partie en saillie ; et
une seconde partie de serrage disposée dans la seconde partie en saillie de la seconde partie annulaire et configurée et agencée pour ajuster une largeur de la seconde fente.

5. Jeu de direction (10, 110, 210, 310, 410, 510, 610) selon la revendication 3 ou 4, dans lequel les premier et second éléments de fixation sont configurés et agencés pour être disposés les uns par rapport aux autres de sorte que les première et seconde fentes sont disposées sur les côtés opposés dans une direction radiale des première et seconde parties annulaires.

6. Jeu de direction (10, 110, 210, 310, 410, 510, 610) pour bicyclette selon la revendication 5, dans lequel les premier et second éléments de fixation sont configurés et agencés pour être disposés les uns par rapport aux autres de sorte que les première et seconde parties de serrage sont disposées sur les côtés opposés dans la direction radiale des première et seconde parties annulaires.

7. Jeu de direction (10, 110, 210, 310, 410, 510, 610) de bicyclette selon la revendication 3, dans lequel les premier et second éléments de fixation sont configurés et agencés pour être disposés les uns par rapport aux autres de sorte que les première et seconde fentes sont alignées dans une direction axiale des première et seconde parties annulaires.

8. Jeu de direction (10, 110, 210, 310, 410, 510, 610) de bicyclette selon la revendication 7, dans lequel les première et seconde parties annulaires comprennent en outre des première et seconde parties d'articulation (460, 461) respectivement qui sont configurées et agencées pour ouvrir et fermer les première et seconde parties annulaires.

9. Jeu de direction (10, 110, 210, 310, 410, 510, 610) pour bicyclette selon la revendication 4, dans lequel les première et seconde parties annulaires comprennent des structures étagées pour empêcher une rotation relative entre les première et seconde parties annulaires.

10. Jeu de direction (10, 110, 210, 310, 410, 510, 610) de bicyclette selon la revendication 4, dans lequel les première et seconde parties annulaires comprennent une structure avec une saillie radiale et une indentation radiale pour empêcher la rotation relative entre les première et seconde parties annulaires en mettant en prise la saillie radiale avec l'indentation radiale.

11. Jeu de direction (10, 110, 210, 310, 410, 510, 610) de bicyclette selon la revendication 4, dans lequel la seconde partie annulaire comprend une partie d'échappement (133b) configurée et agencée pour recevoir la première partie d'extrémité de la partie tubulaire (20, 120) de l'élément d'ajustement (15), et une partie de contact (22) avec un plus petit diamètre que la partie d'échappement (133b) qui est configurée et agencée pour être en contact avec une surface périphérique externe de la colonne de fourche (98a).

12. Jeu de direction (10, 110, 210, 310, 410, 510, 610) de bicyclette selon la revendication 3, dans lequel les premier et second éléments de fixation sont formés comme un élément unitaire d'un seul tenant.

13. Jeu de direction (10, 110, 210, 310, 410, 510, 610) de bicyclette selon la revendication 12, dans lequel les premier et second éléments de fixation sont formés conjointement à une partie annulaire unique (571) avec une partie en saillie (572) s'étendant à partir de la partie annulaire unique (571) dans une direction externe radiale, et une fente étant formée dans la partie en saillie (572) qui s'étend dans la direction radiale à partir d'une surface périphérique interne de la partie annulaire (571) jusqu'à la partie en saillie (572),
la partie annulaire unique (571) comprenant une première partie annulaire avec une partie de vis femelle (581a) formée sur sa surface périphérique interne, une seconde partie annulaire ayant une partie de morsure faisant saillie dans une direction interne radiale et configurée et agencée pour être fixée à la colonne de fourche (98a) lorsque la partie de morsure se met en prise avec la colonne de fourche (98a), et la partie en saillie (572) comprenant une partie de serrage configurée et agencée pour ajuster une largeur de la seconde fente.

14. Jeu de direction (10, 110, 210, 310, 410, 510, 610) de bicyclette, selon l'une quelconque des revendications précédentes, comprenant en outre un élément d'étanchéité (19) configuré et agencé pour recouvrir le roulement supérieur du tube de direction (102a) de bicyclette.

15. Jeu de direction (10, 110, 210, 310, 410, 510, 610) de bicyclette selon la revendication 2, dans lequel le premier élément de fixation est formé de manière solidaire avec une tige de poignée (611) de la bicyclette.

16. Jeu de direction (10, 110, 210, 310, 410, 510, 610) de bicyclette selon la revendication 2, dans lequel :
Le premier élément de fixation comprend en outre :
une partie annulaire supplémentaire (611) formée de manière solidaire avec la première partie annulaire, et configurée et agencée pour être fixée à la colonne de fourche (98a) de bicyclette,
une partie en saillie supplémentaire (613) s'étendant à partir de la partie annulaire supplémentaire (611) dans une direction externe radiale, la partie en saillie supplémentaire (613) étant disposée de manière axiale vers le haut par rapport à la première partie en saillie, la partie en saillie supplémentaire (613) comprenant une fente supplémentaire (612) s'étendant dans la direction radiale à partir d'une surface périphérique interne de la partie annulaire supplémentaire (611), et
une partie de serrage supplémentaire (615) disposée dans la partie en saillie supplémentaire (613), et configurée et agencée pour ajuster une largeur de la fente supplémentaire (612).
